(19) Europäisches Patentamt
European Patent Office
Office européen des brevets

(11) **EP 1 032 464 B2**

(12) **NOUVEAU FASCICULE DE BREVET EUROPEEN**
Après la procédure d'opposition

(45) Date de publication et mention de la décision concernant l'opposition:
**25.02.2009 Bulletin 2009/09**

(45) Mention de la délivrance du brevet:
**02.07.2003 Bulletin 2003/27**

(21) Numéro de dépôt: **98958949.4**

(22) Date de dépôt: **09.11.1998**

(51) Int Cl.:
**B01D 3/00** (2006.01)

(86) Numéro de dépôt international:
**PCT/FR1998/002386**

(87) Numéro de publication internationale:
**WO 1999/025445 (27.05.1999 Gazette 1999/21)**

(54) **DISTRIBUTEUR DE LIQUIDE POUR COLONNE DE DISTILLATION NON VERTICALE, ET COLONNE DE DISTILLATION AINSI EQUIPEE**

FLÜSSIGKEITSVERTEILER FÜR NICHT SENKRECHTE DESTILLATIONSKOLONNE UND DAMIT AUSGERÜSTETE DESTILLATIONSKOLONNE

LIQUID DISPENSER FOR NON-VERTICAL DISTILLING COLUMN, AND DISTILLING COLUMN EQUIPPED THEREWITH

(84) Etats contractants désignés:
**DE DK FR GB NL SE**

(30) Priorité: **17.11.1997 FR 9714377**

(43) Date de publication de la demande:
**06.09.2000 Bulletin 2000/36**

(73) Titulaire: **L'AIR LIQUIDE, Société Anonyme pour l'Etude et l'Exploitation des Procédés Georges Claude 75007 Paris (FR)**

(72) Inventeur: **LEHMAN, Jean-Yves F-94700 Maisons-Alfort (FR)**

(74) Mandataire: **Mercey, Fiona Susan et al L'Air Liquide SA, DSPI - Service Brevets & Marques, 75 Quai d'Orsay 75321 Paris Cedex 07 (FR)**

(56) Documents cités:
**DE-B- 1 113 680**    **GB-A- 2 039 779**
**GB-A- 2 062 489**    **US-A- 4 776 989**

EP 1 032 464 B2

**Description**

La présente invention est relative à un distributeur de liquide pour colonne de distillation, du type comprenant un volume principal présentant en partie basse des ouvertures de sortie réparties dans une région.

DE-B-1113680 et GB-A-2039779 décrivent des distributeurs installés dans des colonnes embarquées permettant une distribution peu sensible aux oscillations des colonnes.

Les plates-formes pétrolières flottantes produisent des gaz résiduaires. Pour des raisons économiques et environnementales, il devient de plus en plus nécessaire de récupérer ces gaz. Une méthode consiste en leur conversion en hydrocarbures plus lourds , sous forme liquide et donc plus facilement transportables, par le procédé Fischer-Tropsch, lequel consomme de grandes quantités d'oxygène.

Il serait donc intéressant de pouvoir embarquer une colonne de distillation d'air sur une plate-forme flottante ou une barge, mais le bon fonctionnement d'un tel équipement se heurte à de sérieuses difficultés. Ainsi, un premier impératif est que le liquide soit uniformément distribué en tête de colonne sur toute la section de celle-ci malgré les oscillations de son axe dues à la houle.

L'invention a pour but de fournir un distributeur de liquide dont le fonctionnement soit très peu sensible à de telles oscillations.

A cet effet, l'invention a pour objet un distributeur de liquide selon la revendication 1.

Le distributeur selon l'invention peut comporter une ou plusieurs des caractéristiques suivantes :

- l'ouverture est constituée par une perforation unique ou par plusieurs perforations voisines les unes des autres;
- l'organe de transport comporte une extrémité d'entrée située au-dessous et à l'aplomb de ladite ouverture et espacée de l'extrémité de sortie de cette dernière;
- l'organe de transport comporte à son extrémité de sortie un dispositif d'arrosage d'une zone d'arrosage dont l'aire est supérieure à celle de ladite ouverture;
- le diamètre moyen de ladite région est inférieur au diamètre moyen de la surface contenant les orifices de sortie des organes de transport, le rapport des diamètres étant notamment de 1 à 6 environ;
- les ouvertures sont disposées dans un premier plan sensiblement horizontal en couronnes concentriques sensiblement circulaires correspondant chacune à une couronne d'orifices de sortie disposée dans un second plan sensiblement horizontal situé en-dessous du premier plan et comportant le même nombre de points de fourniture, et un organe de transport relie chaque point de la première couronne à un point associé de la deuxième couronne;
- les couples de points associés sont décalés angulairement d'un même angle autour de l'axe des couronnes, les organes de transport associant deux couronnes formant une surface-enveloppe en forme de manchon et l'ensemble des organes de transport formant une série de telles surfaces-enveloppes emboîtées les unes dans les autres;
- - ledit décalage angulaire est inversé d'une surface-enveloppe à la suivante;
- les extrémités de sortie des organes de transport fournissent le liquide à plusieurs récipients de distribution secondaire à fond perforé.

L'invention a également pour objet une colonne de distillation caractérisée en ce qu'elle comporte, à au moins un niveau, un distributeur de liquide tel que défini ci-dessus, surmontant un tronçon de distillation.

Suivant d'autres caractéristiques de cette colonne de distillation :

- le tronçon de distillation est à garnissage ondulé-croisé;
- le distributeur est le distributeur de tête de la colonne, ledit volume principal étant au moins partiellement logé dans le dôme supérieur de celle-ci;
- les organes de transport délivrent directement le liquide sur le tronçon de distillation;
- la colonne est embarquée sur une structure flottante telle qu'une plate-forme pétrolière flottante ou une barge.

Des exemples de réalisation de l'invention vont maintenant être décrits en regard des dessins annexés, sur lesquels :

- la Figure 1 représente schématiquement, en coupe axiale, un récipient à fond perforé en position inclinée;
- la Figure 2 représente schématiquement en perspective un distributeur de liquide conforme à l'invention, disposé en tête d'une colonne de distillation;
- la Figure 3 est une vue schématique en plan du distributeur de la Figure 2;
- la Figure 4 représente schématiquement un organe de transport de liquide de ce distributeur;
- les Figures 5 et 5A sont des vues analogues de deux variantes;
- la Figure 6 illustre schématiquement un autre mode de réalisation du distributeur de liquide suivant l'invention;
- les Figures 8 et 9 représentent schématiquement deux variantes d'un détail du distributeur conforme à l'invention.

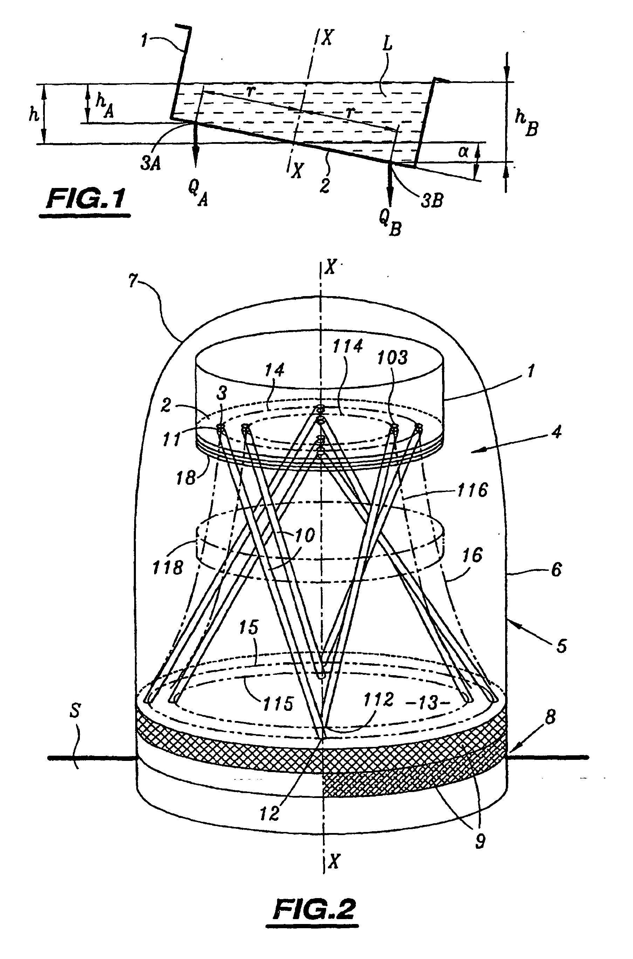

On a représenté sur la Figure 1 un récipient 1 en forme de cuvette dont le fond 2 est perforé d'ouvertures 3 et a une forme circulaire d'axe X-X normalement vertical. Les ouvertures 3 peuvent notamment être des trous circulaires, et, sauf indication contraire, on supposera qu'il en est ainsi et que les trous sont tous identiques.

Lorsque le récipient contient un liquide L et l'axe X-X est incliné d'un angle α sur la verticale, les ouvertures 3 situées à une même distance r de cet axe fournissent des débits de liquide différents, car ils sont surmontés de hauteurs de liquide différentes.

Ainsi, dans le plan d'inclinaison, qui est celui de la Figure 1, l'ouverture haute 3A fournit un débit $Q_A$ proportionnel à $\sqrt{h - r \sin\alpha}$, tandis que l'ouverture basse 3B fournit un débit $Q_B$ proportionnel à $\sqrt{h + r \sin\alpha}$. Dans les conditions d'oscillation dues à la houle, si le récipient forme un distributeur de tête d'une colonne de distillation embarquée, avec son rayon sensiblement identique à celui de la colonne, la différence de débit peut être de l'ordre de 10% ou plus, ce qui est inacceptable pour assurer un fonctionnement satisfaisant de la colonne.

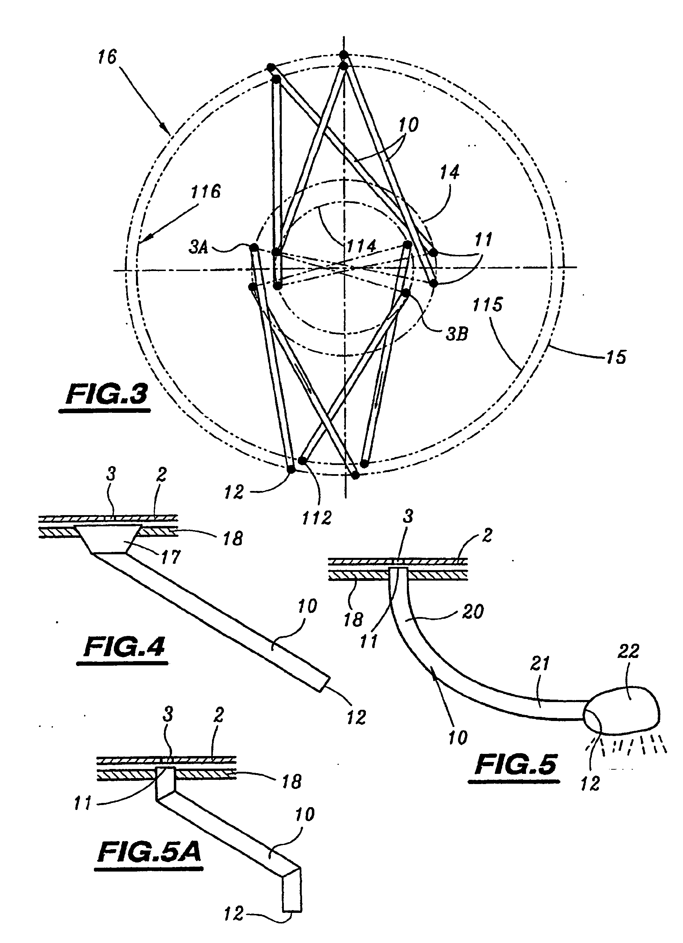

Les Figures 2 et 3 représentent un distributeur de liquide 4 qui comprend le récipient 1 et qui, au contraire, assure une distribution du liquide pratiquement uniforme sur toute la section de la colonne de distillation 5 quelle que soit l'inclinaison, dans les conditions d'oscillation précitées. En variante, le récipient 1 pourrait d'ailleurs être remplacé par une série de goulottes à fond perforé, ou par une nappe de tubes perforés.

La colonne de distillation 5 comprend, à sa partie supérieure, une virole cylindrique 6 d'axe X-X, et un dôme supérieur 7. La colonne est embarquée sur une structure flottante schématisée en S sur la Figure 2. Le tronçon supérieur de distillation 8 de la colonne est constitué d'un garnissage ondulé-croisé.

Comme il est bien connu, un tel garnissage comporte une superposition de tronçons ou packs 9 de garnissage ondulé-croisé, dont chacun a la forme d'une galette cylindrique occupant toute la section de la colonne.

Chaque pack 9 est constitué d'un empilement de bandes ondulées à ondes obliques. Chaque bande comporte un plan général vertical, toutes les bandes ont la même hauteur, et les ondes sont alternativement inclinées dans un sens et dans l'autre d'une bande à la suivante. Ainsi, les ondes des bandes adjacentes se touchent en un grand nombre de points d'intersection. De plus, les packs 9 sont décalés angulairement de 90° d'un pack au suivant par rapport à l'axe général de la colonne.

Le récipient 1, ouvert vers le haut et de diamètre nettement inférieur au diamètre intérieur de la virole 6, est logé dans le dôme 7. Le rapport des diamètres est typiquement de 1 à 6. Le fond 2 du récipient 1 comporte autant d'ouvertures 3 que l'on souhaite de points de distribution du liquide sur le pack 9 supérieur, soit typiquement 1000 à 3000 ouvertures pour une colonne de 4 m de diamètre environ.

Le distributeur 4 comporte en outre un tube rectiligne 10 par ouverture 3. Chaque tube 10 possède un orifice supérieur d'entrée 11 disposé juste sous l'ouverture 3 correspondante, et un orifice inférieur de sortie 12 disposé juste au-dessus de la surface supérieure 13 du pack 9 supérieur. Si r et R désignent respectivement les distances à l'axe X-X des orifices 11 et 12, alors R > r. De plus, le point 12 est décalé angulairement de 90°, autour de l'axe X-X, par rapport au point 11, comme on le voit bien sur les Figures 2 et 3.

Les ouvertures 3 sont disposées suivant une série de couronnes concentriques. A chaque couronne 14 de rayon moyen r est associée une couronne 15 de rayon moyen R de la surface 13, et tous les tubes qui relient ces deux couronnes sont inclinés dans le même sens. Ainsi, l'ensemble des tubes 10 associés à deux couronnes homologues 14 et 15 données constitue des génératrices d'un hyperboloïde de révolution 16.

Pour deux couples de couronnes 14 et 114 adjacentes, les tubes 10 sont inclinés en sens inverses, formant ainsi deux hyperboloïdes de révolution 16 et 116 emboîtés l'un dans l'autre. L'hyperboloïde 116 schématisé sur la Figure 2 correspond ainsi aux couronnes 114 et 115 situées immédiatement à l'intérieur des couronnes 14 et 15 précitées.

L'ensemble des tubes 10 forme de cette manière un empilement d'hyperboloïdes de révolution dont les génératrices sont alternativement inclinées dans les deux sens.

Lorsque l'axe X-X est vertical, tous les tubes 10 fournissent le même débit de liquide du fait de la symétrie de révolution de l'ensemble du distributeur 4.

Lorsque l'axe X-X est incliné, le rayon du récipient 1, nettement inférieur à celui de la colonne, a pour effet de réduire les différences de débit entre les ouvertures 3 de son fond 2.

De plus, les couples d'ouvertures sensiblement diamétralement opposés appartenant à deux couronnes 14, 114 adjacentes sont reliés par leurs tubes 10 à deux points 12, 112, adjacents l'un à l'autre, car situés sensiblement dans le même demi-plan radial passant par l'axe X-X et appartenant à deux couronnes 15, 115 adjacentes.

Par suite, la zone de la surface 13 située juste au-dessous des points 12 et 112 reçoit la somme des débits issus d'un couple d'ouvertures sensiblement diamétralement opposées du récipient 1, somme qui est pratiquement constante pour tous les couples d'ouvertures.

Il suffit donc que l'aire de la zone en question soit assez petite pour que les deux débits soient bien remélangés par le garnissage ondulé-croisé, pour que la distribution du liquide sur toute la surface 13 reste en permanence quasi-uniforme malgré les oscillations de l'axe X-X.

On remarque par ailleurs que la structure du distributeur 1 laisse passer sans perte de charge notable le gaz montant, entre les tubes 10 et autour du récipient 1.

La Figure 4 représente un tube 10 rectiligne, muni à son entrée d'un entonnoir 17 qui garantit le recueil de tout le liquide issu de l'ouverture 3 correspondante. L'ensemble des entonnoirs 17 sont fixés en place au moyen d'une plaque 18 à orifices de même diamètre que le récipient 1, disposée à une faible distance au-dessous du fond 2 et fixée à celui-ci.

De plus, comme schématisé sur la Figure 2, tous les tubes 10 sont positionnés les uns par rapport aux autres, à un niveau intermédiaire entre le récipient 1 et la surface 13, par une structure de positionnement appropriée 118.

La Figure 5 illustre plusieurs modifications de l'agencement de la Figure 4 :

- D'une part, l'entonnoir 17 est supprimé, et l'orifice d'entrée 11 du tube 10, de diamètre nettement supérieur à celui de l'ouverture 3, est positionné juste au-dessous de l'extrémité inférieure de cette dernière, mais espacée de celle-ci, au moyen de la plaque 18 liée au récipient 1.
- D'autre part, les tubes 10 sont incurvés, avec une partie amont 20 d'accélération du liquide, à forte pente, et une partie aval 21 à pente plus faible.
- Enfin, l'extrémité inférieure 12 des tubes 10 est équipée d'une pomme d'arrosage 22, ce qui favorise l'étalement de la distribution du liquide sur la surface 13. En effet, la pomme d'arrosage 22 distribue le liquide sur une aire de la surface 13 supérieure à celle de l'ouverture 3 correspondante.

Dans cet exemple, les tubes courbes associés à deux couronnes homologues sont bobinés de manière à générer autour de l'axe X-X une surface en forme de manchon. Ainsi, l'ensemble des tubes courbes forme une série de telles surfaces emboîtées les unes dans les autres, les sens de bobinage des tubes étant inversés d'une surface à la suivante.

La variante de la Figure 5A diffère de la précédente d'une part par la suppression de la pomme d'arrosage 22, et d'autre part par la forme du tube 10. En effet, celui-ci comporte une partie principale rectiligne inclinée, comme celui de la Figure 4, et est coudé pour former deux parties d'extrémité également rectilignes mais verticales.

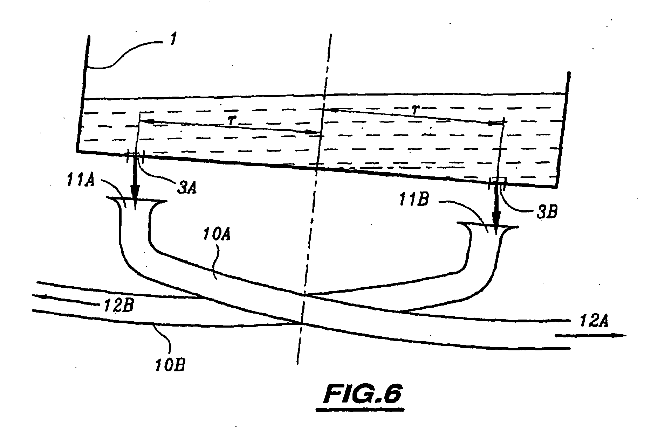

La Figure 6 illustre une autre manière de corriger les effets de l'inclinaison de la colonne en obtenant une distribution liquide qui anticipe les défauts dé distribution dans le garnissage dus à l'inclinaison. En effet, sous l'effet de l'inclinaison, le liquide a tendance à s'accumuler d'un côté de la colonne, tandis que l'autre côté s'assèche progressivement. Il peut donc être judicieux d'alimenter le côté qui s'assèche par un débit liquide plus important et le côté opposé par un débit plus faible.

Pour cela, des tubes 10A et 10B associés à des ouvertures 3A et 3B sensiblement diamétralement opposées conduisent à des points 12A, 12B de la surface 13 qui sont également sensiblement diamétralement opposés mais qui sont inversés par rapport aux deux ouvertures. Ainsi, le point 12A (respectivement 12B) se trouve sensiblement dans le même demi-plan radial, par rapport à l'axe X-X, que l'ouverture 3B (respectivement 3A). Cet agencement permet donc d'arroser de façon plus importante les zones de garnissage susceptibles de s'assécher sous l'effet de l'inclinaison. Cependant, pour obtenir comme précédemment une structure perméable au gaz montant et sans croisement entre les tubes 10, la réalisation des nombreux tubes 10 suppose ,dans ce cas, leur mise sous une forme complexe, notamment hélicoïdale, ce qui est plus compliqué que dans le mode de réalisation des Figures 1 et 2.

Dans l'exemple de la Figure 6, le point 12A est décalé angulairement de 180° autour de X-X' par rapport au point 11A. Pour des angles compris entre 100° et 180°, on obtient un effet de correction ou "sur-compensation" de la distribution plus ou moins fort, le maximum étant atteint pour 180°.

Comme on le comprend, le mode de correction ou de "sur-compensation" des débits schématisé sur-la Figure 6 peut également s'appliquer au transport du liquide du récipient 1 aux récipients 101 ou aux compartiments 123 dans le cas d'un distributeur à deux étages.

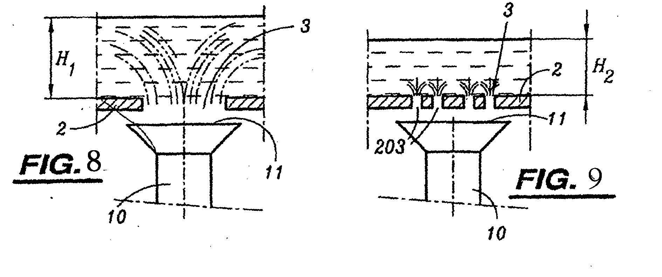

Dans chacun des modes de réalisation décrits ci-dessus, chaque ouverture 3, au lieu d'être constituée d'une unique perforation de diamètre relativement grand, peut être constituée par un groupe de perforations 203 de plus petit diamètre proches les uns des autres. L'avantage résultant est de permettre d'obtenir un débit donné de liquide avec une hauteur H2 (Figure 9) inférieure à celle $H_1$ nécessaire dans le cas d'une unique perforation (Figure 8), laquelle crée un effet de vortex perturbateur. Cependant, le diamètre des perforations multiples 203 doit rester suffisant pour éviter tout risque de bouchage par des impuretés contenues dans le liquide à distiller.

Comme on le comprend, l'invention s'applique également à la distribution de liquide de reflux dans une colonne fixe mais dont l'axe n'est pas parfaitement vertical.

Le WO-A-90/10 497 décrit, entre autres, un garnissage analogue aux garnissages ondulés-croisés précités, mais perforé de manière différente. Le terme "garnissage ondulé-croisé" utilisé ici comprend également un tel garnissage, ainsi que tout garnissage analogue.

**Revendications**

1. Distributeur de liquide pour colonne de distillation, du type comprenant un volume principal (1) qui présente en partie basse des ouvertures de sortie (3) réparties dans une région (2), comprenant plusieurs organes de transport, chacun (10; 110) adapté pour véhiculer par gravité le liquide issu d'une ouverture (3) jusqu'à un point de fourniture (12, 112; 101, 123) non situé à l'aplomb de cette ouverture le flux de liquide provenant de chaque ouverture ou groupe d'ouvertures (3A, 3B) dudit volume principal est véhiculé par l'organe de transport respectif (10A, 10B) de façon que son débit devienne plus fort lorsque la zone arrosée est en hauteur sous l'effet de l'inclinaison et plus faible dans le cas contraire et l'organe de transport (10A, 10B) associé à chaque ouverture (3A, 3B) conduit à un point de fourniture situé angulairement à un angle de 180° de cette ouverture par rapport à un axe central (X-X) du distributeur, **caractérisé en ce que** chaque organe de transport (10; 110) comprend un conduit ouvert vers le haut sous forme d'une goulotte ou fermé sous forme d'un tube, ce conduit étant rectiligne, coudé en un ou plusieurs emplacements ou courbe.

**2.** Distributeur suivant la revendication 1, **caractérisé en ce que** chaque ouverture (3) est constituée par une perforation unique ou par plusieurs perforations (203) voisines les unes des autres.

**3.** Distributeur suivant la revendication 1 ou 2, **caractérisé en ce que** l'organe de transport (10; 110) comporte une extrémité d'entrée (11) située au-dessous et à l'aplomb de ladite ouverture (3) et espacée de l'extrémité de sortie de cette dernière.

**4.** Distributeur suivant l'une quelconque des revendications 1 à 3, **caractérisé en ce que** l'organe de transport comporte à son extrémité de sortie un dispositif (22) d'arrosage d'une zone d'arrosage dont l'aire est supérieure à celle de ladite ouverture (3).

**5.** Distributeur suivant l'une quelconque des revendications 1 à 4, **caractérisé en ce qu'**il comprend plusieurs organes de transport et **en ce que** le diamètre moyen de ladite région (2) est inférieur au diamètre moyen de la surface contenant les orifices de sortie (12) des organes de transport, le rapport des diamètres étant notamment supérieur à 1 et inférieur à 6 environ.

**6.** Distributeur suivant l'une quelconque des revendications 1 à 5, **caractérisé en ce qu'**il comprend plusieurs organes de transport, **en ce que** les ouvertures (3) dudit volume principal sont disposées dans un premier plan sensiblement horizontal (2) en couronnes concentriques sensiblement circulaires correspondant chacune à une couronne d'orifices de sortie (12) disposée dans un second plan sensiblement horizontal situé en-dessous du premier plan et comportent le même nombre de points de fourniture, et **en ce qu'**un organe de transport (10) relie chaque point de la première couronne à un point associé de la deuxième couronne.

**7.** Distributeur suivant la revendication 6, **caractérisé en ce que** les couples de points associés sont décalés angulairement d'un même angle autour de l'axe (X-X) des couronnes, les organes de transport (10) associant deux couronnes formant une surface-enveloppe (16, 116) en forme de manchon et l'ensemble des organes de transport formant une série de telles surfaces-enveloppes emboîtées les unes dans les autres.

**8.** Distributeur suivant la revendication 7, **caractérisé en ce que** ledit décalage angulaire est inversé d'une surface-enveloppe (16, 116) à la suivante.

**9.** Distributeur suivant l'une quelconque des revendications 1 à 8, **caractérisé en ce qu'**il comprend plusieurs organes de transport, et **en ce que** les extrémités de sortie des organes de transport (10, 110) fournissent le liquide à plusieurs récipients de distribution secondaire (101; 123) à fond (102) perforé.

**10.** Colonne de distillation, **caractérisée en ce qu'**elle comporte, à au moins un niveau, un distributeur de liquide (4) suivant l'une quelconque des revendications 1 à 9, surmontant un tronçon de distillation (8).

**11.** colonne de distillation suivant la revendication 10, **caractérisée en ce que** le tronçon de distillation (8) est à garnissage ondulé-croisé.

**12.** Colonne de distillation suivant la revendication 10 ou 11, **caractérisée en ce que** le distributeur (4) est le distributeur de tête de la colonne (5), ledit volume principal (1) étant au moins partiellement logé dans le dôme supérieur (7) de celle-ci.

**13.** Colonne de distillation suivant l'une quelconque des revendications 10 à 12, **caractérisée en ce que** les organes de transport (10) délivrent directement le liquide sur le tronçon de distillation (8).

**14.** Colonne de distillation suivant l'une quelconque des revendications 10 à 13, **caractérisée en ce qu'**elle est embarquée sur une structure flottante (S) telle qu'une plate-forme pétrolière flottante ou une barge.

**Claims**

**1.** Liquid distributor for distillation column, of the type comprising a main volume (1) which has in its lower part outlet openings (3) distributed in a region (2), comprising several transport elements, (10; 110) each designed to convey the liquid delivered by an opening (3) under gravity to a supply point (12, 112; 101, 123) not located plumb with this opening,
the liquid flow output by each opening or group of openings (3A, 3B) of the said main volume is conveyed by the respective transport element (10A, 10B) in such a way that its flow rate becomes higher when the irrigated zone is elevated under the effect of the inclination, and lower in the converse case, and the transport element (10A, 10B) associated with each opening (3A, 3B) leads to a supply point located angularly at an angle of 180° from this opening with respect to a central axis (X-X) of the distributor,
**characterized in that** each transport element (10; 110) comprises a conduit which is open at the top in the form of a funnel or closed in the form of a tube, this conduit being straight, bent at one or more points or curved.

2. Distributor according to Claim 1, **characterized in that** each opening (3) consists of a single perforation or of a plurality of perforations (203) close to one another.

3. Distributor according to Claim 1 or 2, **characterized in that** the transport element (10; 110) has an inlet end (11) located below and plumb with the said opening (3) and separated from the outlet end of the latter.

4. Distributor according to any one of Claims 1 to 3, **characterized in that**, at its outlet end, the transport element comprises a device (22) for irrigating an irrigation zone whose area is greater than that of the said opening (3).

5. Distributor according to any one of Claims 1 to 4, **characterized in that** it comprises several transport elements, and **in that** the average diameter of the said region (2) is less than the average diameter of the surface containing the outlet orifices (12) of the transport elements, the ratio of the diameters being, in particular, greater than 1 and less than 6 approximately.

6. Distributor according to any one of Claims 1 to 5, **characterized in that** it comprises several transport elements, **in that** the openings (3) of the said main volume are arranged in a first substantially horizontal plane (2) as substantially circular concentric rings, each corresponding to a ring of outlet orifices (12) which is arranged in a second substantially horizontal plane, located below the first plane, and including the same number of supply points, and **in that** one transport element (10) connects each point in the first ring to an associated point in the second ring.

7. Distributor according to Claim 6, **characterized in that** the pairs of associated points are angularly offset by the same angle about the axis (X-X) of the rings, the transport elements (10) associating two rings forming an envelope surface (16, 116) in the form of a sleeve, and all the transport elements together forming a series of such envelope surfaces nested in each other.

8. Distributor according to Claim 7, **characterized in that** the said angular offset is reversed from one envelope surface (16, 116) to the next.

9. Distributor according to any one of Claims 1 to 8, **characterized in that** it comprises several transport elements, and **in that** the outlet ends of the transport elements (10, 110) supply the liquid to a plurality of secondary distribution containers (101; 123) with a perforated bottom (102).

10. Distillation column, **characterized in that**, at at least one level, it includes a liquid distributor (4) according to any one of Claims 1 to 9, positioned on top of a distillation section (8).

11. Distillation column according to Claim 10, **characterized in that** the distillation section (8) has cross-corrugated packing.

12. Distillation column according to Claim 10 or 11, **characterized in that** the distributor (4) is the head distributor of the column (5), the said main volume (1) being at least partially accommodated in the upper dome (7) of this column.

13. Distillation column according to any one of Claims 10 to 12, **characterized in that** the transport elements (10) feed the liquid directly to the distillation section (8).

14. Distillation column according to any one of Claims 10 to 13, **characterized in that** it is on board a floating structure (S) such as a floating oil platform or a barge.

**Patentansprüche**

1. Flüssigkeitsverteiler für eine Destillationskolonne, umfassend ein Hauptvolumen (1), das im unteren Teil Ausgangsöffnungen (3) aufweist, die in einer Zone (2) verteilt sind; umfassend mehrere Transportelemente (10; 110), die jeweils dazu vorgesehen sind, die Flüssigkeit, die aus mindestens einer Öffnung (3) kommt, durch Schwerkraft zu einem Lieferpunkt (12, 112; 101, 123) zu befördern, der nicht lotrecht zu dieser Öffnung liegt, wobei der Flüssigkeitsstrom, der von jeder Öffnung oder Gruppe von Öffnungen (3A, 3B) des Hauptvolumens kommt, von dem entsprechenden Transportelement (10A, 10B) derart befördert wird, dass sein Durchsatz stärker wird, wenn die besprühte Zone unter Einwirkung der Neigung höher liegt, und im umgekehrten Fall schwächer wird, und das Transportelement (10A, 10B), das jeder Öffnung (3A, 3B) zugeordnet ist, zu einem Lieferpunkt führt, der sich winkelig in einem Winkel von 180° zu dieser Öffnung in Bezug zur Mittelachse (X-X) des Verteilers befindet, **dadurch gekennzeichnet, dass** jedes Transportelement (10; 110) eine nach oben in Form einer Rutsche offene oder in Form einer Röhre geschlossene Leitung umfasst, wobei diese Leitung gerade, an einer oder mehreren Stellen geknickt oder gebogen ist.

**2.** Verteiler nach Anspruch 1, **dadurch gekennzeichnet, dass** jede Öffnung (3) aus einer einzigen Perforation oder aus mehreren nebeneinander liegenden Perforationen (203) besteht.

**3.** Verteiler nach Anspruch 1 oder 2, **dadurch gekennzeichnet, dass** das Transportorgan (10; 110) ein Eingangsende (11) umfasst, das unterhalb und lotrecht unter der Öffnung (3) liegt und vom Ausgangsende von letzterer beabstandet ist.

**4.** Verteiler nach einem der Ansprüche 1 bis 3, **dadurch gekennzeichnet, dass** das Transportorgan an seinem Ausgangsende eine Vorrichtung (22) zum Besprühen einer Sprühzone besitzt, deren Fläche größer ist als die Öffnung (3).

**5.** Verteiler nach einem der Ansprüche 1 bis 4, **dadurch gekennzeichnet, dass** er mehrere Transportorgane umfasst, und dadurch, dass der mittlere Durchmesser der Zone (2) kleiner ist als der mittlere Durchmesser der Fläche, die die Ausgangsöffnungen (12) der Transportorgane enthält, wobei das Verhältnis der Durchmesser insbesondere größer als 1 und kleiner als etwa 6 ist.

**6.** Verteiler nach einem der Ansprüche 1 bis 5, **dadurch gekennzeichnet, dass** er mehrere Transportorgane umfasst, dass die Öffnungen (3) des Hauptvolumens in einer ersten in etwa horizontalen Ebene (2) in konzentrischen, in etwa kreisförmigen Kränzen angeordnet sind, die jeweils einem Kranz Ausgangsöffnungen (12) entsprechen, der in einer zweiten in etwa horizontalen Ebene unter der ersten Ebene angeordnet ist und die gleiche Anzahl Lieferpunkte umfasst, und dadurch, dass ein Transportorgan (10) jeden Punkt des ersten Kranzes mit einem assoziierten Punkt des zweiten Kranzes verbindet.

**7.** Verteiler nach Anspruch 6, **dadurch gekennzeichnet, dass** die Paare assoziierter Punkte winkelig um einen gleichen Winkel um die Achse (X-X) der Kränze versetzt sind, wobei die Transportorgane (10), die zwei Kränze assoziieren, eine Manteloberfläche (16, 116) in Form eine Stutzens bilden und die Einheit der Transportorgane eine Reihe solcher Manteloberflächen bildet, die ineinander verschachtelt sind.

**8.** Verteiler nach Anspruch 7, **dadurch gekennzeichnet, dass** die winkelige Versetzung von einer Manteloberfläche (16, 116) zur anderen umgekehrt ist.

**9.** Verteiler nach einem der Ansprüche 1 bis 8, **dadurch gekennzeichnet, dass** er mehrere Transportorgane umfasst, und dadurch, dass die Ausgangsenden der Transportorgane (10, 110) die Flüssigkeit an mehrere Sekundärverteilbehälter (101; 123) mit perforiertem Boden (102) liefern.

**10.** Destillationskolonne, **dadurch gekennzeichnet, dass** sie auf mindestens einem Niveau einen Flüssigkeitsverteiler (4) nach einem der Ansprüche 1 bis 9 umfasst, der über einen Destillationsabschnitt (8) ragt.

**11.** Destillationskolonne nach Anspruch 10, **dadurch gekennzeichnet, dass** der Destillationsabschnitt (8) wellig-verkreuzt ausgekleidet ist.

**12.** Destillationskolonne nach Anspruch 10 oder 11, **dadurch gekennzeichnet, dass** der Verteiler (4) der Kopfverteiler der Kolonne (5) ist, wobei das Hauptvolumen (1) mindestens teilweise im oberen Dom (7) der Kolonne untergebracht ist.

**13.** Destillationskolonne nach einem der Ansprüche 10 bis 12, **dadurch gekennzeichnet, dass** die Transportorgane (10) die Flüssigkeit direkt auf den Destillationsabschnitt (8) liefern.

**14.** Destillationskolonne nach einem der Ansprüche 10 bis 13, **dadurch gekennzeichnet, dass** sie auf einem schwimmenden Aufbau (S) mitgeführt wird, wie zum Beispiel auf einer schwimmenden Erdölplattform oder auf einer Bohrinsel.

**FIG.1**

**FIG.2**

**FIG.3**

**FIG.4**

**FIG.5**

**FIG.5A**

FIG.6

FIG.8

FIG. 9

**EP 1 032 464 B2**

**RÉFÉRENCES CITÉES DANS LA DESCRIPTION**

**Documents brevets cités dans la description**

- DE 1113680 B
- GB 2039779 A
- WO 9010497 A